# EUROPÄISCHE PATENTANMELDUNG

(11) **EP 1 481 848 A2**
(43) Veröffentlichungstag der Anmeldung: **01.12.2004**
(21) Anmeldenummer: 04011887.9
(22) Anmeldetag: 19.05.2004
(51) Int. Cl.: B60Q 5/00

(54) **Bedienschalter für einen Warnsignalgeber in einem Fahrzeug**

(30) Priorität: 28.05.2003 DE 10324234
(71) Anmelder: Methode Electronics Malta Ltd., Mriehel QRM 09 (MT)
(72) Erfinder: Spiteri, André, Sta. Lucia (MT)
(74) Vertreter: Haft, von Puttkamer, Berngruber, Karaktsanis

(57) **Zusammenfassung**

Bedienschalter für einen Warnsignalgeber in einem Fahrzeug Ein Bedienschalter (1) mit mehreren Schaltkontakten (5) für einen Warnsignalgeber weist einen stabartigen Träger (2) auf, der durch Einkerbungen (3) in mehrere Segmente (4) unterteilt ist. Der Träger (2) ist an den Einkerbungen (3) derart knickbar, dass der ursprünglich gestreckte Träger (2) zu einem Polygon verformbar und an die Einbauform anpassbar ist.

## Beschreibung

Bedienschalter für einen Warnsignalgeber in einem Fahrzeug Die Erfindung bezieht sich auf einen Bedienschalter für einen Warnsignalgeber in einem Fahrzeug, wobei der Bedienschalter mehrere in einer Funktionsebene verteilte, an einem bogenförmig verlaufenden Träger ausgebildete Schaltkontakte aufweist.

Ein derartiger Bedienschalter in einer Lenkradnabe eines Automobils ist z.B. durch die EP1270332 A bekannt geworden. Danach weist der mehrlagige bogenförmig ausgeformte Träger an seinen Enden und im Mittelabschnitt Schaltkontakte auf, die über streifenförmige Leiterbahnen an elektrisches Potential angeschlossen sind. Die Leiterbahnen sind an den Schaltkontakten mit Abstand einander überdeckend ausgebildet. Der Träger ist an diesen Stellen bei Betätigung des Bedienschalters derart zusammendrückbar, dass die Leiterbahnen bei zumindest einem der Schaltkontakte in der Art von Aufsetzkontakten miteinander kontaktiert werden können.

Der Erfindung liegt die Aufgabe zugrunde, den Transportaufwand zu verringern und die Einbaumöglichkeiten zu erweitern.

Diese Aufgabe wird durch die im Kennzeichen des Anspruchs 1 angegebenen Merkmale gelöst. Durch die Verformbarkeit des Trägers ist es möglich, diesen in einer weitgehend gestreckten Form zu fertigen und raumsparend verpackt zu liefern. Insbesondere kann der Träger geradlinig gestreckt hergestellt werden, wodurch sich ein Formwerkzeug entsprechend einfacher Herstellen lässt. Am Montageort kann der Träger seiner Einbauform angepasst werden, wobei durch die Verformbarkeit Lageabweichungen an den Montagepunkten leicht ausgeglichen werden können.

Vorteilhafte Weiterbildungen der Erfindung ergeben sich aus den in den Ansprüchen 2 bis 9 gekennzeichneten Merkmalen.

Der Träger nach Anspruch 2 kann besonders einfach verformt und seiner Verlaufsform angepasst werden.

Die Biegezonen nach Anspruch 3 können z.B. in der Art von Bandscharnieren ausgebildet sein. Besonders vorteilhaft ist es, an den Biegezonen zusätzliche Sollbruchverbindungsstege vorzusehen, die den Träger vor der Verformung in seiner gestreckten Form fixieren und die beim Verformen durchgetrennt oder bleibend verformt werden.

Durch die Rastelemente nach Anspruch 4 kann der Träger in seinem polygonalen Verlauf stabilisiert und leicht montiert werden.

Die Metallblechstreifen nach den Ansprüchen 5 und 6 bilden gut verstärken die Bandscharniere und können zugleich als elektrische Leiter für die Schaltkontakte dienen.

Der Schaltvorgang bei dem Bedienschalter nach Anspruch 7 ist nicht von einer Andrückkraft sondern lediglich von einer Wegstrecke des Schiebers abhängig. Die Kontaktkräfte sind unabhängig von der Betätigungskraft, so dass ab einer Mindesthubstrecke gleichbleibende Kontaktbedingungen gewährleistet sind. Die beiden fluchtend in ihrer Materialebene übereinander liegenden Metallstreifen bilden besonders funktionssichere Scharniere. Da die Metallstreifen außerdem in der Betätigungsrichtung übereinanderliegen, können besonders einfache Schiebeschalter ausgebildet werden.

Durch die Zusammenfassung des Trägerkörpers und der Gehäuse nach Anspruch 8 wird die Herstellung des Bedienschalters vereinfacht.

Durch die Weiterbildung nach Anspruch 9 können die Metallstreifen z.B. nach dem Spritzgießen des Trägers an diesem einfach und sicher angebracht werden.

Ein Ausführungsbeispiel der Erfindung ist in der Zeichnung dargestellt und wird im folgenden näher erläutert. Es zeigen:
- Figur 1: perspektivisch einen Bedienschalter für einen Warnsignalgeber, z.B. eine Hupe zum Einbau in eine Lenkradnabe eines Fahrzeugs nach der Herstellung,
- Figur 2: den verformten Bedienschalter nach Figur 1 in einem einbaufähigen Zustand,
- Figur 3: einen vergrößerten Ausschnitt aus dem Bedienschalter nach Figur 2,
- Figur 4: einen anderen Ausschnitt aus dem Bedienschalter nach Figur 2,
- Figur 5: einen Schnitt durch den Bedienschalter entlang der Linie V-V in Figur 2.

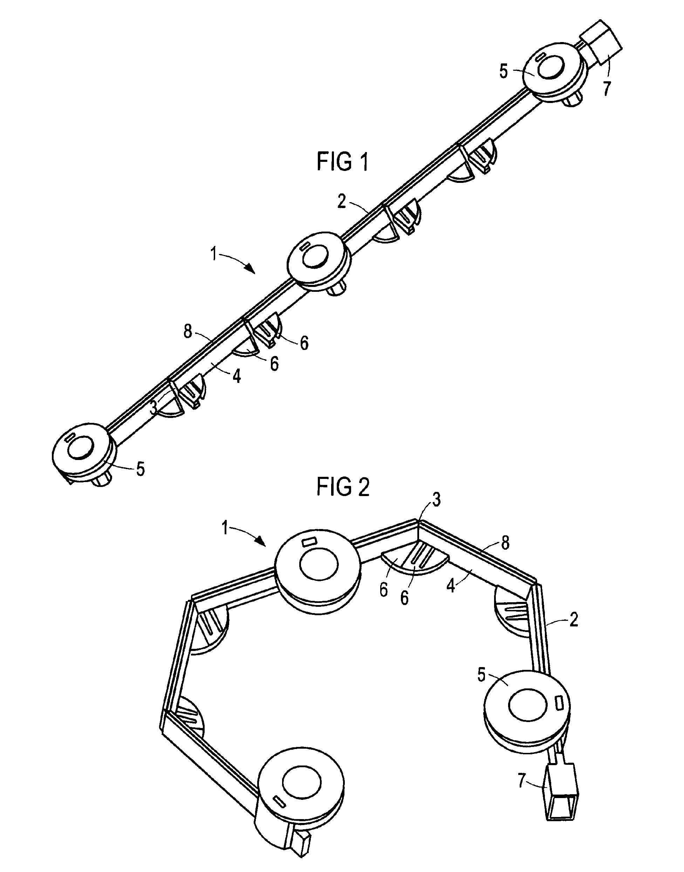

Nach Figur 1 besteht ein Bedienschalter 1 im wesentlichen aus einem stangenartigen geradlinig verlaufenden einstückigen Träger 2, der durch seitliche Einkerbungen 3 in mehrere formsteife Segmente 4 unterteilt ist. Im Mittelabschnitt des Trägers 2 und an seinen Enden sind Schaltkontakte 5 angebracht. An den Einkerbungen sind Rastelemente 6 angeordnet, die sich hier außer Eingriff befinden. An einem Ende des Trägers 2 ist ein Stecker 7 zum Anschluss des Bedienschalters 1 an elektrisches Potential angebracht. In den Träger 2 sind Metallstreifen 8 eingesetzt, die sich vom Stecker 7 aus bis zum gegenüberliegenden Ende des Trägers 2 erstrecken. Der Bedienschalter kann in dieser Form raumsparend verpackt und versandt werden.

Nach Figur 2 ist der Träger 2 an den Einkerbungen 3 so stark zu einem Polygon geknickt, dass die Rastelemente 6 auf Anschlag in Eingriff gelangt sind und damit den Träger 2 in seiner polygonalen Einbauform fixieren. Dieser Arbeitsgang kann je nach Kundenwunsch beim Schalterhersteller oder beim Fahrzeughersteller vorgenommen werden.

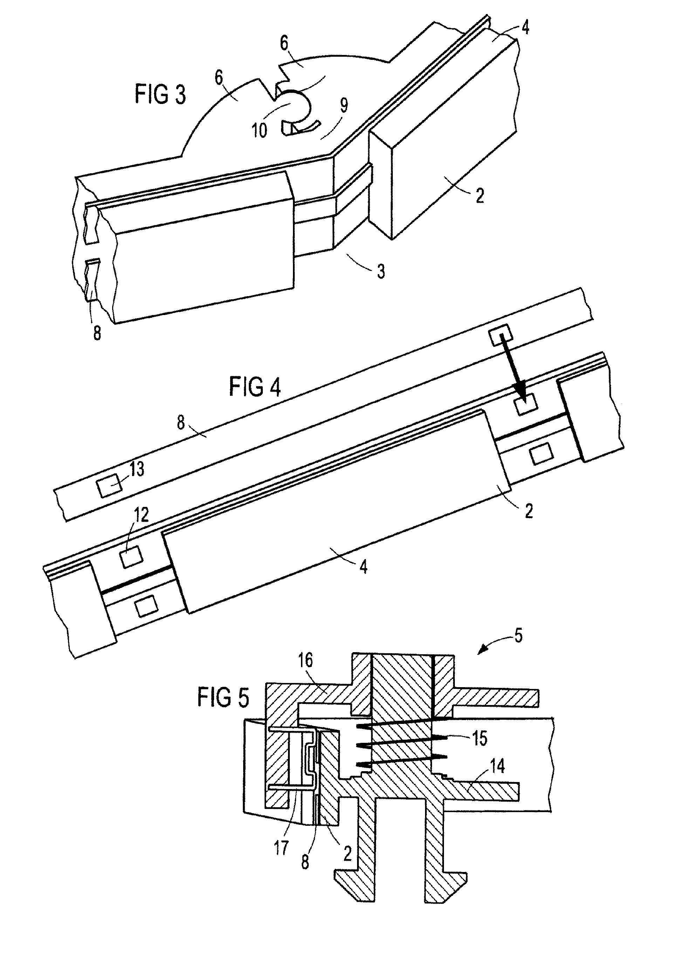

Figur 3 zeigt den Träger 2 im Bereich einer der Einkerbungen 3. Sein Querschnitt ist in einem kurzen Abschnitt zu einem biegbaren Steg 9 verringert, der aber so steif ist, dass die gestreckte Herstellform des Trägers 2 erhalten bleibt. Das Knicken in die polygonale Verlaufsform kann jedoch ohne weiteres manuell ausgeführt werden, wobei der Steg 9 bleibend verformt werden kann. Die Rastelemente 6 sind an der Innenecke der Knickstelle derart angebracht, dass eine Rastnase 10 einem der Segmente 4 und eine Rastöffnung 11 dem benachbarten Segment 4 zugeordnet ist, so dass deren Winkelstellung präzise fixiert wird. Die Metallstreifen 8 sind senkrecht zur Funktionsebene fluchtend übereinander angeordnet und in längsseitig offene Nuten der Segmente 4 aus entgegengesetzten Richtungen eingesetzt. Die Metallstreifen 8 verstärken das durch den Steg 9 gebildete Biegegelenk.

Figur 4 zeigt den gestreckten Träger 2 mit einem der Metallstreifen 8 unmittelbar vor dem Einsetzen in die Nuten der Segmente 4 in der angedeuteten Pfeilrichtung. Der Trägers 2 weist im Bereich der Einkerbungen 3 flache Rasthöcker 12 auf, auf welche die Metallstreifen 8 mit Durchbrüchen 12 nach dem Einsetzen in die Nuten der Segmente 4 aufgedrückt werden können.

Nach Figur 5 ist ein Gehäuse 14 des Schaltkontakts 5 einstückig mit dem Träger 2 verbunden. Ein am Gehäuse 14 in der Materialebene der Metallstreifen gegen eine Feder 15 verschiebbarer Schieber 16 weist eine Kontaktbrücke 17 auf, die mit einem der Metallstreifen 8 kontaktiert ist. Der Schieber 16 wird z.B. durch einen Höcker einer Hubplatte des Lenkrads zum Gehäuse 14 hin verschoben. Dabei gelangt die Kontaktbrücke 17 in eine Hubstellung, in der sie mit beiden Metallstreifen 8 kontaktiert ist und diese elektrisch miteinander verbindet, wodurch der Warnsignalgeber eingeschaltet wird.

### Bezugszeichen

- 1: Bedienschalter
- 2: Träger
- 3: Einkerbung
- 4: Segment
- 5: Schaltkontakt
- 6: Rastelement
- 7: Stecker
- 8: Metallstreifen
- 9: Steg
- 10: Rastnase
- 11: Rastöffnung
- 12: Rasthöcker
- 13: Durchbruch
- 14: Gehäuse
- 15: Feder
- 16: Schieber
- 17: Kontaktbrücke

## Patentansprüche

1. Bedienschalter (1) für einen Warnsignalgeber in einem Fahrzeug,
wobei der Bedienschalter (1) mehrere in einer Funktionsebene verteilte, an einem bogenförmig verlaufenden Träger (2) ausgebildete Schaltkontakte (5) aufweist, **dadurch gekennzeichnet, dass** der stabartig schlanke Träger (2) aus einer gestreckten Verlaufsform in die Bogenform verformbar ist.

2. Bedienschalter nach Anspruch 1,
**dadurch gekennzeichnet, dass** der Träger (2) aus gelenkig miteinander verbundenen, formsteifen Segmenten (4) gebildet und zu einem der Bogenform angenäherten Polygon deformierbar ist.

3. Bedienschalter nach Anspruch 2,
**dadurch gekennzeichnet, dass** die Segmente (4) über im Querschnitt verringerte Biegezonen miteinander verbunden sind.

4. Bedienschalter nach Anspruch 2 oder 3,
**dadurch gekennzeichnet, dass** der Träger (2) an den Einkerbungen (3) aufweisenden Biegezonen mit Rastelementen (6) zum Fixieren in einer definierten polygonalen Einbauform aufweist.

5. Bedienschalter nach Anspruch 2, 3 oder 4,
**dadurch gekennzeichnet, dass** am Träger (2) in den Biegezonen Bandscharniere bildende Metallstreifen (8) fixiert sind.

6. Bedienschalter nach Anspruch 5,
**dadurch gekennzeichnet, dass** sich die Metallstreifen (8) entlang dem aus Isolierstoff bestehenden Träger (2) erstrecken und elektrisches Potential anschließbar sind.

7. Bedienschalter (1) mit einem in einer Funktionsebene bogenförmig verlaufenden Träger (2) für elektrische Schaltkontakte (5), die über eingesetzte Metallstreifen (8) an elektrisches Potential anschließbar sind, insbesondere nach Anspruch 4,
**dadurch gekennzeichnet, dass** die Metallstreifen (8) senkrecht zur Verlaufsebene des Trägers (2) mit Abstand fluchtend übereinander stehen und das die Schaltkontakte (5) Schieber (16) zum elektrischen Überbrücken der Metallstreifen (8) aufweisen.

8. Bedienschalter nach Anspruch 7,
**dadurch gekennzeichnet, dass** ein Gehäuse (14) des Schaltkontakts (5) einstückiger Bestandteil des Trägers (2) ist und dass der gefederte Schieber (16) am Gehäuse geführt ist.

9. Bedienschalter nach Anspruch 7 oder 8,
**dadurch gekennzeichnet, dass** der Träger (2) mit Führungsnuten und Rasthöckern (12) zum Halten der Metallstreifen (8) versehen ist.
